Europäisches Patentamt

European Patent Office

Office européen des brevets

(11) Numéro de publication: **0 085 062**
**B1**

## (12)   FASCICULE DE BREVET EUROPEEN

(45) Date de publication du fascicule du brevet: **01.04.87**

(51) Int. Cl.⁴: **B 65 B 7/28**, D 04 B 1/14

(21) Numéro de dépôt: **82902183.1**

(22) Date de dépôt: **23.07.82**

(86) Numéro de dépôt international:
**PCT/FR82/00125**

(87) Numéro de publication internationale:
**WO 83/00472 17.02.83 Gazette 83/05**

(54) **MATIERE COMPOSITE TRICOTEE, MISE EN FORME DE CETTE MATIERE ET PIECE CONFORMEE AINSI OBTENUE.**

(30) Priorité: **03.08.81 FR 8115037**

(43) Date de publication de la demande:
**10.08.83 Bulletin 83/32**

(45) Mention de la délivrance du brevet:
**01.04.87 Bulletin 87/14**

(84) Etats contractants désignés:
**AT BE CH GB LI LU NL SE**

(56) Documents cités:
**BE-A- 737 713**
**FR-A-2 239 116**
**FR-A-2 407 861**

(73) Titulaire: **SOCIETE DES ETABLISSEMENTS GANTOIS**
**25, rue des Frères Mougeotte**
**F-88100 Saint Die (FR)**

(72) Inventeur: **BRUNCHER, Bernard**
**La Beugrée Pair et Grandrupt**
**F-88100 Saint Die (FR)**

(74) Mandataire: **Nuss, Pierre**
**10, rue Jacques Kablé**
**F-67000 Strasbourg (FR)**

Courier Press, Leamington Spa, England.

## Description

L'invention a pour objet une matière composite qui réunit des propriétés d'élasticité et de conduction thermique et électrique grâce auxquelles les pièces réalisées à partir de cette matière apportent une solution avantageuse, et parfois l'unique solution possible, à des conditions de fonctionnement difficiles à satisfaire ou même impossibles à satisfaire autrement.

On connaît dans le domaine des fils métalliques ce que l'on appelle le tricot métallique qui est obtenu par tricotage d'un ou de plusieurs fils métalliques. Ces derniers sont de natures diverses (cuivre, acier doux, etc...) mais le tricot que l'on réalise en les tricotant est homogène car composé d'un ou de plusieurs fils de même nature. Les tricots connus sont appelés homogènes, ici, pour les distinguer de la matière de l'invention parce qu'ils sont obtenus à l'aide de fils qui sont à l'état recuit ou qui n'ont qu'une élasticité résiduelle faible. A partir de ces tricots homogènes, on confectionne des pièces utilisées principalement en raison de leur porosité dans les domains de la filtration, de la séparation de phases, etc... La confection de ces pièces comporte parfois une opération de compression du tricot préalablement enroulé sur lui-même. Qu'il ait été comprimé ou non, les pièces obtenues à partir du tricot classique ne sont pas utilisables pour leur élasticité parce que cell-ci est soit nulle soit insuffisante pour être exploitée.

En outre, FR—A—2 239 116 décrit une matière tricotée à l'aide de fils différents par leur nature, leur diamètre, ou par un traitement préalablement effectué sur eux, cette matière pouvant être utilisée comme garniture présentant une bonne souplesse utile pour la confection de joints. Cette souplesse est obtenue grâce à la réalisation de rangées réalisées avec des fils de structure mêcanique différente. Cependant, la matière selon FR—A—2 239 116 nécessite un tricotage différent en fonction de sa finalité, avec des ondulations et des propriétés différentes selon la nature et la propriété des fils, pour obtenir une transmission électrique pour un joint hyperfréquence ou une bonne souplesse pour la réalisation d'un bourrelet de calage. La réalisation d'un tricot présentant simultanément toutes les caractéristiques n'est donc pas possible.

On connaît également, par FR—A—2 407 861, un procédé et un dispositif de thermoscellage d'opercules sur des récipients en verre, qui consistent à assurer une pression uniformément répartie sur toute la périphérie du col des récipients et une bonne transmission de la chaleur. Dans ce brevet, un fluide sous pression est mis en oeuvre, ce fluide étant éventuellement choisi pour transmettre également un flux thermique. Cependent, un tel mode de réalisation est particulièrement complexe et difficile à mettre en oeuvre.

Le mérite de l'invention consiste à réaliser une matière composite à partir du tricotage de deux fils au moins qui diffèrent par leur état, recuit d'une part, élastique d'autre part, et qui, en plus, peuvent différer aussi par leur nature.

A cet effet, l'invention a pour objet une matière composite poreuse, conductrice de la chaleur et de l'électricité, apte à transmettre une pression de manière élastique et à se conformer par simple compression, matière constituée de fils métalliques tricotés ensemble ou enchevêtrés, lesdits fils étant soit du type ou à l'état non élastique, soit du type ou à l'état élastique (voir FR—A—2 239 116), caractérisée en ce qu'un des fils est du type ou à l'état non élastique, et les autres fils sont du type ou à l'état élastique, le fil non élastique étant un fil de cuivre recuit présentant un diamétre d'environ 120 microns, et les fils élastiques étant trois fils d'acier inoxydable à haute résistance d'un diamètre d'environ 60 microns chacun.

L'invention a également pour objet un procédé de réalisation d'une pièce de forme quelconque, caractérisée en ce qu'à partir des fils constituant une matière composite comprenant au moins un fil du type ou à l'état non élastique, les autres fils étant du type ou à l'état élastique, il consiste à tricoter un fil composite constitué par ledit fil non élastique et par lesdits fils élastiques, à rouler ou à replier la bande de tricot obtenue afin de lui donner la forme générale de la pièce à obtenir, à comprimer ensuite cette ébauche dans une matrice en pressant les fils élastiques sur le fil non élastique de manière à réaliser une déformation permanente du fil non élastique tout en maintenant la capacité de déformation élastique des fils élastiques.

On obtient ainsi une matière qui peut être mise en forme quelconque, par compression grâce à la déformation permanente que subit le fil à l'ètat recuit mais qui conserve encore une élasticité notable grâce à la présence du fil élastique. Cette élasticité est importante au point que l'on peut l'exploiter industriellement en transmission élastique d'une pression ou d'une force qui déforme momentanément la pièce à partir de la forme initiale qui lui a été donnée. Après suppression de cette force ou de cette pression transmise, la pièce reprend sa forme initiale. Cette opération peut être répétée autant de fois que l'on veut.

Bien entendu, d'autres matières connues permettent de transmettre élastiquement une force ou une pression, comme le caoutchouc par exemple. Toutefois, la matière composite et élastique selon l'invention à l'avantage de transmettre en plus la chaleur puis qu'elle comprend un fil métallique bon conducteur de la chaleur comme le cuivre.

D'autres pièces connues, comme un ressort hélicoïdal, permettent de transmettre une force. Mais un réssort de compression ne transmet pas ou très mal la chaleur; en outre, il ne peut transmettre correctement une pression répartie sur une surface. La matière composite et élastique de l'invention à l'avantage de répartir uniformément sur une surface donnée la force à laquelle elle est soumise. De cette façon, elle s'avère apte à assurer par elle-même, sans l'emploi de moyens complémentaires, un contact étroit d'une surface contre une autre surface.

Grâce au fil de cuivre, la matière composite de l'invention transmet également le courant électrique. Elle pute donc réaliser une pression élastique uniformément répartie et permettre le passage d'un courant électrique pendant cette pression. On peut envisager des applications dans lesquelles les fils traversés par le courant électrique constitueraient une résistance chauffante permettant de produire au sein même de la pièce en matière composite selon l'invention la chaleur à transmettre.

Pour expliquer le procédé de réalisation d'une pièce en matière composite selon l'invention on se référera, pour fixer les idées, à un exemple réel qui est le suivant.

On prend d'une part un fil de cuivre à l'état recuit ayant un diamétre d'environ 120 microns et d'autre part trois fils d'acier inoxydable à haute résistance, d'un diamètre d'environ microns chacun, à l'état élastique. Avec ces fils on alimente simultanément les aiguilles d'un métier à tricoter et on réalise, de la façon habituelle connue, une bande tricotée qui est composite ou hétérogène. Ensuite, on enroule ou on replie cette bande pour lui donner grossièrement la configuration voulue puis on la met à la forme finale désirée en la soumettant, dans une matrice appropriée, à une compression suffisante qui impose une déformation permanente au fil de cuivre mais qui laisse une capacité de déformation élastique au fil élastique. On obtient une pièce qui reste élastique dans toutes les directions et qui reprend sa forme après une nouvelle contrainte de compression.

Bien entendu, on choisit la grosseur et le nombre de fils qui sont à l'état non élastique et de ceux qui sont à l'état élastique en fonction des caractéristiques souhaitées: la pièce doit être plus ou moins élastique, ou plus ou moins conductrice de la chaleur, ou de l'électricité.

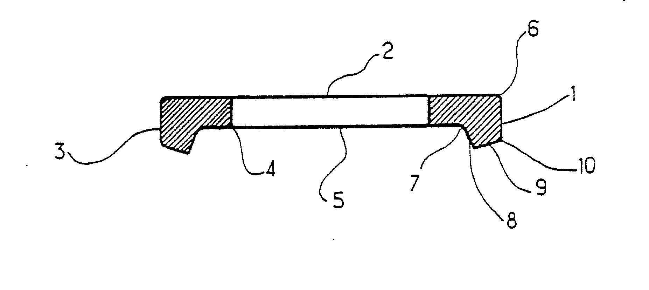

On se reportera maintenant à la figure unique annexée pour décrire un type de pièce réalisée en matiére composite conforme à l'invention.

Cette figure est une vue en coupe par un plan diamètral d'une piéce conformée en anneau.

Ce dernier a été obtenu à partir d'une bande tricotée à l'aide des fils décrits ci-dessus. Cette bande a été enroulée pour prendre grossièrement la forme de l'anneau souhaité puis elle a été comprimée dans une matrice jusqu'à la déformation permanente à la suite de quoi elle a conservé le profil représenté sur la figure.

L'anneau 1 a une face supérieure 2 plane, une face latérale extérieure 3 cylindrique, une face interieure 4 cylindrique, une face inférieure 5 plane. La face supérieure 2 et la face latérale extérieure 3 se raccordant par un faible arrondi 6. La face inférieure 5 se raccorde également par un arrondi 7 à une face oblique 8 inclinée vers l'extérieur et vers la bas qui se raccorde elle-même avec une face oblique 9 inclinée vers le haut en direction de la face latérale 3. Ces deux faces 9 et 3 se raccordent par un faible arrondi 10.

Cette pièce s'adapte sur toute extrémité cylindrique et pourra y placer et sceller une membrane ou un opercule de fermeture.

D'autres formes s'adapteraient de la même façon à d'autres types d'extrémités pour y transmettre une quantité de chaleur et une pression.

Il suffit d'imprimer la déformation permanente appropriée de mise en forme.

Bien entendu une application intéressante concerne l'utilisation pour l'obturation de récipients rigides à l'aide d'un opercule scellé sur le rebord du goulot par thermocollage. La pièce réalisée avec la matiére selon l'invention assurera grâce à ses propriétés le collage uniforme à chaud garantissant une fermeture hermétique.

On notera aussi qu'en plus des propriétés décrites plus hautla matière de l'invention conserve encore celle de présenter une porosité que l'on peut exploiter dans certaines circonstances simultanément à ces propriétés nouvelles. En effet, cette porosité, inhérente au tricot, n'est pas détruite par la compression qui lui est imposée lors de sa mise en forme. Il est clair que la compression de travail que met à profit l'élasticité de la matiére de l'invention n'est pas de même ordre que la compression de mise en forme. En général, on observe un rapport de 3 à 10 entre cette dernière, qui est nécessairement plus élevée, et la compression de travail.

De nombreuses applications de la matière selon l'invention s'avèrent possibles, il suffit de la conformer selon la forme la plus appropriée, en général, celle qui épouse la mieux la piéce à travailler ou à garnir.

## Revendications

1. Matiére composite poreuse, conductrice de la chaleur et de l'électricité, apte à transmettre une pression de manière élastique et à se conformer par simple compression, matière constituée de fils métalliques tricotés ensemble ou enchevétrés, lesdits fils étant soit du type ou à l'état non élastique, soit du type ou à l'état élastique, caractérisée en ce qu'un des fils est du type ou à l'état non élastique, et les autres fils sont du type ou à l'état élastique, le fil non élastique étant un fil de cuivre recuit présentant un diamètre d'environ 120 microns, et les fils élastiques étant trois fils d'acier inoxydable à haute résistance d'un diamètre d'environ 60 microns chacun.

2. Procédé de réalisation d'une pièce de forme quelconque, caractérisée en ce qu'à partir de fils constituant une matière composite comprenant au moins un fil du type ou à l'état non élastique, les autres fils étant du type ou à l'état élastique, il consiste à tricoter un fil composite constitué par ledit fil non élastique et par lesdits fils élastiques, à rouler ou à replier la bande de tricot obtenue afin de lui donner la forme générale de la pièce à obtenir, à comprimer ensuite cette ébauche dans une matrice en pressant les fils élastiques sur le fil non élastique de manière à réaliser une déformation permanente du fil non élastique tout en maintenant la capacité de déformation élastique des fils élastiques.

3. Pièce en matiére composite susceptible d'être obtenue par application du procédé suivant la revendication 2.

4. Pièce, selon la revendication 3, dans lequelle le fil non élastique est un fil de cuivre recuit présentant un diamètre d'environ 120 microns, et les fils élastiques sont trois fils en acier inoxydable à haute résistance d'un diamètre d'environ 60 microns chacun.

5. Pièce suivant l'une quelconque des revendications 3 et 4, caractérisée en ce qu'elle est une pièce annulaire de contact pour tête de thermocollage, dont la sousface affecte une forme en creux (5, 7, 8) permettant d'épouser la partie terminale supérieure du goulot d'un récipient en verre à obturer de façon étanche par une feuille thermocollée sur le rebord extérieur supérieur du goulot.

**Patentansprüche**

1. Poröser, wärme- und stromleitender Verbundwerkstoff, der geeignet ist, einen Druck elastisch zu übertragen und sich durch einfache Komprimierung anzupassen, bestehend aus miteinander verwirkten oder verwobenen Metallfäden, wobei die besagten Fäden entweder von nicht-elastischer oder elastischer Art oder Beschaffenheit sind, dadurch gekennzeichnet, daß einer der Fäden nach Art oder Beschaffenheit nicht-elastisch und die anderen Fäden nach Art oder Beschaffenheit elastisch sind, der nicht-elastische Faden ein einen Durchmesser von ca. 120 Mikron aufweisender Faden aus geglühtem Kupfer ist, und die elastischen Fäden drei rostfreie, hochwiderstandsfähige Fäden mit einem Durchmesser von jeweils ca. 60 Mikron sind.

2. Verfahren zur Herstellung eines Stücks irgendeiner Form, dadurch gekennzeichnet, daß es darin besteht, aus einen Verbundwerkstoff bildenden Fäden, welcher mindestens einen nach Art oder Beschaffenheit nicht-elastischen Faden, wobei die anderen Fäden nach der °Art oder Beschaffenheit elastisch sind, besitzt, ein aus dem nicht-elastischen Faden und aus den besagten elastischen Fäden bestehendes Gewebe zu wirken, den erhaltenen Gewebestreifen einzurollen oder umzubiegen, um ihm die generelle Form des zu erzielenden Stücks zu geben, diese Ausgangsform dann in einer Matritze zusammenzupressen, indem die elastischen Fäden auf den nicht-elastischen Faden gepreßt werden, um eine Dauerverformung des nicht-elastischen Fadens, wobei die elastische Verformbarkeit der elastischen Fäden beibehalten wird, zu erreichen.

3. Stück aus Verbundwerkstoff, das durch Anwendung des Verfahrens nach Anspruch 2 erzielt werden kann.

4. Stück nach Anspruch 3, bei welchem der nicht-elastische Faden ein ausgeglühter Kupferfaden ist, der einen Durchmesser von ca. 120 Mikron aufweist, und die elastischen Fäden drei rostfreie, hochwiderstandsfähige Fäden mit einem Durchmesser von jeweils ca. 60 Mikron sind.

5. Stück nach einem der Ansprüche 3 und 4, dadurch gekennzeichnet, daß es ein ringförmiges Kontaktstück als schmelzfixiertes Oberteil ist, dessen Unterseite eine hohle Form (5, 7, 8) annimmt, die ein Anlegen an das obere Endteil des Flaschenhalses eines Glasgefäßes ermöglicht, welches durch eine an den oberen Außenrand des Flaschenhalses schmelzgeklebte Folie verschlossen werden soll.

**Claims**

1. A porous composite material which conducts heat and electricity and is adapted to transmit a pressure in a resilient manner and to be shaped by simple compression, which material consists of wires knitted together or entangled, said wires either being of the non-elastic type or in the non-elastic state or being of the elastic type or in the elastic state, characterised in that one of the wires is of the non-elastic type or in the non-elastic state and the other wires are of the elastic type or in the elastic state, the non-elastic wire being an annealed copper wire having a diameter of about 120 microns and the elastic wires being three high-tensile stainless steel wires each with a diameter of about 60 microns.

2. A process for making an article of any shape, characterised in that, starting from wires consituting a composite material comprising at least one wire of the non-elastic type or in the non-elastic state, the other wires being of the elastic type or in the elastic state, it consists in knitting a composite wire consisting of said non-elastic wire and of said elastic wires, in rolling up or folding up the strip of knitting obtained in order to give it the general shape of the article to be obtained, then in compressing this blank in a die by pressing the elastic wires onto the non-elastic wire in such a manner as to cause a permanent deformation of the non-elastic wire while maintaining the capacity of elastic deformation of the elastic wires.

3. An article of composite material able to be obtained by application of the process according to claim 2.

4. An article, according to claim 3, in which the non-elastic wire is an annealed copper wire having a diameter of about 120 microns, and the elastic wires are three high-tensile stainless steel wires each with a diameter of about 60 microns.

5. An article according to either one of claims 3 and 4, characterised in that it is an annular contact member for a heat-sealing head, the under face of which assumes a hollow shape (5, 7, 8) enabling it to conform to the shape of the upper terminal portion of the neck of a glass receptacle to be closed in a sealed manner by a foil heat-sealed onto the uper outer rim of the neck.